# FASCICULE DE BREVET EUROPEEN

(11) **EP 0 963 450 B1**
(45) Date de publication et mention de la délivrance du brevet: **21.08.2002**
(21) Numéro de dépôt: 98901279.4
(22) Date de dépôt: 21.01.1998
(51) Int. Cl.: C22B 3/04, C22C 1/08, B22F 9/04, C22C 3/00, H01M 4/38, B01J 32/00

(54) **MATERIAUX NANOCRISTALLINS LIXIVIES, LEUR FABRICATION ET LEURS USAGES DANS LE SECTEUR ENERGETIQUE**
GELAUGTE NANOKRRISTALLINE MATERIALIEN, VERFAHREN ZU DEREN HERSTELLUNG UND VERWENDUNG IM ENERGIESEKTOR
LEACHED NANOCRYSTALLINE MATERIALS, METHOD FOR MAKING THEM AND USES IN THE ENERGETIC SECTOR

(30) Priorité: 24.01.1997 US 788301
(43) Date de publication de la demande: 15.12.1999
(73) Titulaire: HYDRO-QUEBEC, Montréal Québec H2Z 1A4 (CA)
(72) Inventeur: SCHULZ, Robert, Ste-Julie, Quebec J0L 2S0 (CA); LALANDE, Guy, Montreal, Quebec H2H 2J2 (CA); HUOT, Jacques, Ste-Julie, Québec J0L 2S0 (CA); DENIS, Marie-Chantal, Longueuil, Quebec J4H 3R6 (CA); LIANG, Guoxian, Longueuil, Quebec J4K 4V8 (CA); VAN NESTE, André, Ste-Foy, Québec G1W 4B6 (CA); GUAY, Daniel, St-Lambert, Québec J4P 3A5 (CA); DODELET, Jean-Pol, Ste-Julie, Québec J0L 2S0 (CA)
(74) Mandataire: Leszczynski, André
(86) Numéro de dépôt international: CA9800042
(87) Numéro de publication internationale: WO98032885

(56) Documents cités:
- EP-A- 0 734 765
- WO-A-96/23906
- DE-A- 3 505 024
- IVANOV E ET AL: "STRUCTURAL AND MAGNETIC PROPERTIES OF NON-EQUILIBRIUM B.C.C NICKEL PREPARED BY LEACHING OF MECHANICALLY ALLOYED NI35AL65" JOURNAL OF ALLOYS AND COMPOUNDS, vol. 185, no. 1, 12 juillet 1992, pages 25-34, XP000270311
- JACKSON E.: "Hydrometallurgical Extraction and Reclamation" 1986 , ELLIS HORWOOD LTD , ENGLAND XP002064065 Pages 56-73 et 190-197
- DATABASE WPI Section Ch, Week 9514 Derwent Publications Ltd., London, GB; Class A41, AN 95-101179 XP002064066 & JP 07 024 318 A (TANAKA KIKINZOKU KOGYO KK)
- CHEN Y ET AL: "PRODUCTION OF RUTILE FROM ILMENITE BY ROOM TEMPERATURE BALL-MILLING -INDUCED SULPHURISATION REACTION" JOURNAL OF ALLOYS AND COMPOUNDS, vol. 245, no. 1/02, 15 novembre 1996, pages 54-58, XP000635391

## Description

### Domaine technique de l'invention

La présente invention a pour objet de nouveaux matériaux nanocristallins présentant une grande surface spécifique.

Elle a également pour objet un procédé de fabrication de ces nouveaux matériaux, incluant une préparation d'un composite ou alliage de structure nanocristalline suivie par une lixiviation de ce composite ou alliage.

L'invention a aussi pour objet l'usage desdits nouveaux matériaux nanocristallins à grande surface spécifique dans le secteur énergétique, et plus précisément pour le stockage de l'hydrogène et/ou la fabrication d'électrodes pour la catalyse ou l'électrocatalyse, telles que celles utilisées dans les piles à combustible ou pour la production d'hydrogène.

L'invention a enfin pour objet certains composites ou alliages de structure nanocristalline utilisables comme produits intermédiaires pour la mise en oeuvre dudit procédé.

Dans la description qui suit, le terme "nanocristallin" est utilisée pour désigner un matériau constitué de cristallites dont la taille des grains est inférieure à 100 nm.

### Arrière-plan technologique

Il est connu de fabriquer des composites ou alliages de structure nanocristalline par broyage mécanique intense, par cristallisation d'un matériau amorphe précurseur obtenu par trempe rapide, ou par condensation en phase vapeur. À titre d'exemples de fabrication par broyage mécanique intense, on peut se référer à la demande de brevet internationale publiée sous le n° WO-A-96/23906 ou à la demande de brevet européen publiée sous le n° EP-A-671.357.

Si les matériaux nanocristallins ainsi obtenus par broyage mécanique ont des avantages, ils ont habituellement des surfaces spécifiques inférieures à 1 m²/g, ce qui les rend inutilisables pour certaines applications où une grande surface spécifique est requise, comme c'est le cas par exemple pour obtenir un bon effet de catalyse ou d'électrocatalyse.

Il est également connu que l'on peut obtenir des matériaux ayant une grande surface spécifique en procédant une lixiviation d'alliages traditionnels contenant dans leur structure un élément chimique lixiviable. Ainsi, il est connu que la lixiviation d'un alliage de NiAl permet d'obtenir du nickel de Raney de grande surface spécifique. Toutefois, pour des raisons thermodynamiques, cette technologie est limitée a un nombre restreint de composés, de structure et de composition très spécifiques.

Le document Chen Y. et al, "Production of rutile from ilmenite by room temperature ball-milling - induced sulphurisation reaction", Journal of Alloys and Compounds, 245 (1996), p.54-58, décrit un procédé où le minerai d'ilménite FeTiO₃ est mélangé avec une poudre de soufre, soumis à un broyage mécanique intense dans un creuset, traité thermiquement puis lixivié dans une solution acide afin d'éliminer le Fe₉S₁₀ qui se forme lors du traitement thermique et obtenir du rutile TiO₂.
Dans le procédé de ce document, la taille des cristaux, qui est de 20 nm après broyage, croît lors du traitement thermique intermédiaire. Cependant, la taille des cristaux après traitement thermique, c'est-à-dire avant lixiviation, n'est pas divulguée.
Pour des traitements thermiques à température moins élevées comme par exemple 400°C, il apparaît dans ce document que le caractère métastable du matériau (FeS₂) peut être conservé.

### Résumé de l'invention

Dans le cadre de la présente invention, il a été découvert que les deux technologies ci-dessus mentionnées peuvent être combinées avec succès. Plus précisément, il a été découvert qu'en préparant des matériaux nanocristallins à base de composites ou d'alliages métastables et en faisant subir à ceux-ci une lixiviation en phase liquide ou gazeuse, il est possible de préparer de nouveaux matériaux nanocristallins métastables qui présentent une très grande surface spécifique les rendant très utiles et efficaces, notamment dans le secteur énergétique.

L'invention telle que décrite de facon large ci-après a donc pour premier objet un procédé de fabrication de matériaux nanocristallins ayant une grande surface spécifique, caractérisé en ce que:
- dans une première étape, on prépare un matériau nanocristallin constitué d'un composite ou alliage métastable d'au moins deux éléments chimiques distincts, ce matériau ayant une structure cristalline avec des cristaux de taille inférieure à 100 nm; et
- dans une seconde étape, on soumet le matériau nanocristallin ainsi préparé à une lixiviation de façon à éliminer partiellement ou totalement au moins un des éléments du composite ou de l'alliage, cette lixiviation donnant au matériau résultant une structure poreuse et, de là, une
   grande surface spécifique.

L'invention telle que décrite a pour second objet les matériaux nanocristallins obtenus par ce procédé. Ces matériaux ont une structure cristalline avec des cristaux d'une taille inférieure à 100 nm. Ils ont aussi une surface spécifique supérieure ou égale à 2 m²/g, et, de préférence, supérieure ou égale à 10 m²/g.

L'invention telle que décrite a pour troisième objet certains usages des nouveaux matériaux nanocristallins ainsi fabriqués dans le secteur énergétique.

Lorsque les matériaux en question comprennent au moins une phase ou un élément chimique connus pour absorber de façon réversible l'hydrogène, ils sont utilisables pour le stockage de l'hydrogène. Leur grande surface spécifique améliore de façon sensible leur cinétique d'absorption/désorption.

Lorsque les matériaux en question comprennent au moins une phase ou un élément chimique utilisables comme catalyseurs ou électrocatalyseurs, ces matériaux sont utilisables pour la fabrication d'électrodes. Leur grande surface spécifique améliore de façon substantielle leur efficacité.

L'invention telle que revendiquée est toutefois restreinte à un procédé de fabrication d'un matériau nanocristallin ayant une grande surface spécifique, du type dans lequel:
- dans une première étape, on prépare un matériau nanocristallin constitué d'un composite ou alliage d'au moins deux composés ou éléments chimiques distincts, le matériau ainsi préparé ayant une structure nanocristalline avec des cristaux de taille inférieure à 100 nm; et
- dans une seconde étape, on soumet ledit matériau nanocristallin à une lixiviation de façon à éliminer partiellement ou totalement au moins un desdits éléments ou composés du composite ou de l'alliage, cette lixiviation donnant au matériau résultant une structure avec une grande surface spécifique,
caractérisé en ce que le composite ou alliage préparé à la première étape est de type métastable et en ce que les composés ou éléments chimiques distincts qui le composent incluent au moins un élément métallique et au moins un élément non métallique choisi dans le groupe constitué par H, C, N, O, F, Cl, P et S.

L'invention telle que revendiquée couvre aussi les matériaux nanocristallins obtenus par ce procédé spécifique et leurs usages.

L'invention et ses divers avantages seront mieux compris à la lecture de la description détaillée et non limitative qui suit, et des exemples pratiques de réalisation annexés.

### Description détaillée de l'invention

Tel que précédemment expliqué, le procédé selon l'invention comprend deux étapes.

La première consiste à préparer un composite ou alliage métastable de plusieurs éléments chimiques distincts, dont la structure est nanocristalline et les cristaux sont de taille inférieure à 100 nm. Cette première étape consiste donc à préparer, par une technique "hors d'équilibre", un alliage nanocristallin ou un nanocomposite ayant une micro structure à l'échelle nanométrique.

D'un point de vue pratique, la préparation de cet alliage ou composite peut être effectuée de diverses façons.

Ainsi, le matériau nanocristallin peut être préparé par broyage mécanique intense. Si les éléments sont fortement solubles l'un dans l'autre, on obtiendra une solution solide ou un alliage nanocristallin. Si les éléments ont une chaleur de mélange positif et donc une faible solubilité l'un dans l'autre, on obtiendra un nanocomposite dont les éléments chimiques seront finement imbriqués l'un dans l'autre.

Cette technique de fabrication par broyage mécanique intense est connue et fait l'objet de plusieurs demandes de brevets dont la Demanderesse est copropriétaire. À ce sujet, on peut se référer à la demande internationale ainsi qu'à la demande européenne auxquelles il a été fait référence dans le préambule du mémoire descriptif.

Lorsque un matériau nanocristallin est ainsi produit, il se présente sous la forme d'une poudre. La préparation de cette poudre peut s'effectuer en une seule étape ou en deux étapes. Dans ce dernier cas, le matériau nanocristallin peut être préparé en soumettant à un premier broyage mécanique intense le ou les éléments non lixiviables choisis jusqu'à l'obtention d'une poudre nanocristalline. On ajoute alors l'élément à lixivier à la poudre ainsi obtenue et on soumet le tout à un second broyage mécanique intense.

Le matériau nanocristallin peut également être préparé partrempe rapide (solidification depuis un état liquide), suivie, si nécessaire, d'un traitement thermique du matériau précurseur obtenu si celui-ci n'est pas cristallin.

Le matériau nanocristallin peut aussi être préparé par condensation en phase vapeur. Cette condensation peut être effectuée suite à une évaporation dans un gaz inerte, en vue de former des agglomérats qui se déposent. Elle peut aussi être effectuée sous vide par pulvérisation cathodique suivie d'une condensation de la vapeur produite sur un substrat. Dans tous les cas, la seule exigence est que le produit ainsi obtenu ait une structure nanocristalline.

La deuxième étape du procédé selon l'invention consiste à lixivier au moins un des éléments chimiques du matériau nanocristallin précédemment produit, en vue de l'éliminer et donner au matériau résultant une structure poreuse et, de là, une plus grande surface spécifique. À ce sujet, on comprendra que la taille la plus fine des pores ou aspérités ainsi obtenues est de l'ordre de quelques nanomètres, puisque la structure du matériau nanocristallin sujette à la lixiviation est elle-même nanocristalline. D'un point de vue pratique, cette lixiviation peut être effectuée de diverses manières: en phase liquide, en phase gazeuse ou par polarisation anodique. Elle peut aussi être partielle ou entière, en fonction des besoins.

Selon l'invention l'élément à lixivier est choisi dans le groupe constitué par H, C, N, O, F, Cl, P et S. La lixiviation de cet élément est effectuée par traitement thermique ou pyrolyse en présence ou non d'un gaz capable de réagir avec ledit élément pour former un autre gaz et éliminer celui-ci, ou encore par réaction avec une phase liquide ou gazeuse. Ainsi, lorsque l'élément à lixivier est du carbone, un traitement thermique à l'air ambiant permettra à celui-ci d'être lixivié sous la forme d'un dioxyde de carbone alors qu'un traitement sous hydrogène pourra conduire à la formation de méthane.

Plutôt qu'un des éléments ci-dessus mentionnés, la lixiviation en phase gazeuse peut être effectuée en utilisant, comme élément additionnel, un composé organométallique.

Il est aussi possible d'utiliser une combinaison des éléments ci-haut mentionnés,

La présente invention permet d'obtenir de façon simple, flexible à grande échelle des matériaux nanocristallins ayant une grande surface spécifique, ce qui les rend particulièrement utiles pour la catalyse, l'électrocatalyse et la production et le stockage d'énergie (piles à combustible, stockage de l'hydrogène, etc...).

Ainsi, l'invention peut être utilisée pour la fabrication d'électrodes pour la catalyse et l'électrocatalyse, comme par exemple, les électrodes utilisées dans les électrocatalyseurs pour la production d'hydrogène, la production du chlorate de sodium ou les électrodes utilisées dans les piles à combustible.

L'invention peut également servir à la fabrication de matériaux absorbants et/ou adsorbants, qui nécessitent de grandes surfaces spécifiques, pour être efficaces. Ce peut être par exemple, des hydrures métalliques ou des matériaux de stockage de l'hydrogène, des matériaux poreux, mésoporeux, des tamis moléculaires ou des membranes pour la filtration.

Lorsque le matériau nanocristallin selon l'invention est destiné à être utilisé pour la catalyse, il est de préférence obtenu par lixiviation d'un matériau nanocristallin se présentant sous la forme d'un composite ou d'un alliage de type

A-X-Y

dans laquelle:
- A est Pt, Ru ou un composé de Pt ou de Ru;
- X est au moins un élément choisis dans le groupe constitué par Ru, Ge, Si, W, Sn, Ga, As, Sb, Mo, Ti, Ta, Cr, Mn, Fe, Co, Ni, Cu, Rh, V, Pd, Ag, In, Os, Ir, Au, Pb, C, Cd, N, P, Bi, Nb et Zr; et
- Y est au moins un élément choisi dans le groupe constitué par H, C, N, O, F, Cl, P et S; ou
- Y est une combinaison des divers éléments Y ci-dessus énumérés avec au moins un élément choisi dans le groupe constitué par Al, Mg, Zn, Li, Na, K, Ca, Ti, Zr, Mo, U et leurs oxydes

On comprendra que, dans la formule qui précède, Y est l'élément lixiviable.

Lorsque la matériau nanocristallin selon l'invention est destiné à être utilisé pour le stockage de l'hydrogène, il est de préférence obtenu par lixiviation d'un matériau nanocristallin de-formule

A'-X'-Y'

dans laquelle:
- A' est Mg, Be ou un composé de Mg ou Be;
- X' est au moins un élément choisi dans le groupe constitué par Li, Ca, Ti, V, Cr, Mn, Fe, Co, Ni, Cu, Zn, Y, Zr, Nb, Mo, In, Sn, O, Si, B et F; et
- Y' est au moins un élément choisi dans le groupe constitué par H, C, N, O, F, Cl, P et S, ou est un composé organométallique dans lequel l'élément métallique est un des métaux énumérés dans la définition du X' ou un métal choisi dans le groupe constitué par Ru, Rh, Pd, Ir et Pt, et la partie organique est lixiviable (ce composé organométallique peut être, par exemple, une phthalocyanine); ou
- Y' est une combinaison des éléments Y' ci-dessus énumérés avec est au moins un élément choisi dans le groupe constitué par Al, Mg, Zn, Li, Na, K, Ca, Ti, Zr, Mo et leurs oxydes

Là encore, on comprendra que Y' est le matériau lixiviable.

D'un point de vue pratique, la quantité d'éléments à lixivier combinée aux autres éléments du composite ou de l'alliage ainsi préparée peut être extrêmement variable. Cette quantité est de préférence choisie de façon à ce que le pourcentage atomique du ou des éléments à lixivier dans le composite ou l'alliage soit supérieure à 2% et inférieur à 95%. On préférera toutefois minimiser la quantité d'éléments à lixivier.

Des exemples d'applications de l'invention pour le stockage de l'hydrogène et la fabrication d'électrodes pour piles à combustibles vont maintenant être donnés en se référant aux figures annexées.

### BREVE DESCRIPTION DES FIGURES

la figure 1 représente des courbes de polarisation où les catalyseurs recouvrant l'anode sont du Pt obtenu par lixiviation d'un composite nanocristallin de structure (PtCl₂)_{0.2} (Al₄C₃)_{0.8} et le catalyseur de marque *E-TEK®*, en présence et en absence de monoxyde de carbone;
la figure 2 représente les courbes d'absorption d'hydrogène en fonction du temps (exprimé en seconde) pour un alliage nanocristallin de formule Mg₂Ni et un alliage nanocristallin de même formule contenant en plus une petite quantité de C dont une partie a été lixiviée;
les figures 3a et 3b sont des photographies de particules nanocristallines de formule MgLi 10% en poids, respectivement avant et après lixiviation du Li;
la figure 4 représente les courbes d'absorption d'hydrogène en fonction du temps (exprimé en seconde) pour du Mg nanocristallin pur et pour du Mg nanocristallin obtenu par lixiviation d'un composite nanocristallin de formule MgLi 10%.

### Applications aux plies à combustible

### Exemple 1

Un mélange de 2,21 g d'une poudre de PtCl₂ et de 4,79 g d'une poudre d'Al₄C₃ correspondant à une composition moyenne (PtCl₂)_{0.2}(Al₄C₃)_{0.8} a été broyée sous argon pendant 40 h dans un creuset de WC avec 3 billes de WC dans un broyeur de marque *SPEX 8000*®. Les billes pesaient environ 30 g et le rapport en poids des billes sur le poids total des poudres (7 g) était de 4:1.

Le composé nanocristallin ainsi obtenu a alors été déposé très lentement et doucement dans un becher d'eau sous atmosphère inerte. On a ensuite rajouté NaOH en agitant mécaniquement le mélange jusqu'à une concentration de 1M (cet ajout lent est nécessaire car Al₄C₃ réagit de façon exothermique avec l'eau et forme avec celle-ci des hydrocarbures susceptibles d'inflammation ou d'explosion).

On a alors filtré, rincé puis séché le produit lixivié ainsi obtenu.

Le produit a alors été appliqué comme catalyseur sur l'anode d'une pile à combustible à raison de 4 mg/cm². La cathode de cette pile était faite d'ELAT® (0.37 mg Pt/cm² et 0.6 mg NAFION®/cm²).

Des essais de polarisation ont été effectués dans les conditions d'opération suivantes:
T cellule: 80°C
T eau/anode: 110°C
T eau/cathode: 110°C
pression H₂: 30 psi
pression O₂: 60 psi

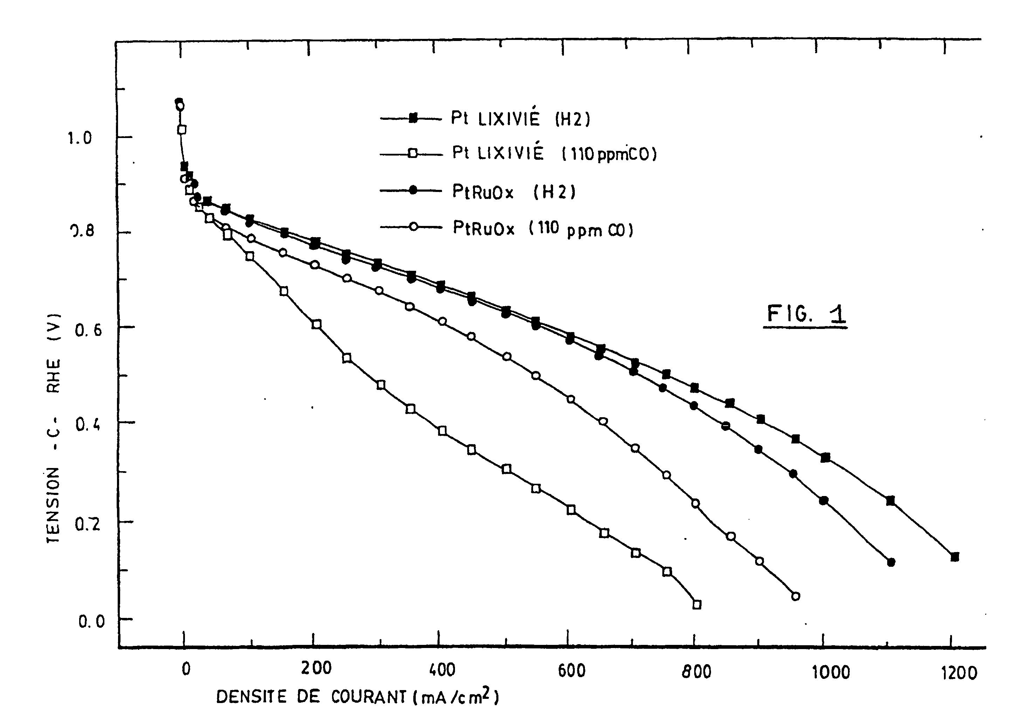

A titre de comparaison, des essais similaires ont été effectués en présence de 110 ppm de CO, et des essais comparatifs avec et sans CO ont été effectués avec un catalyseur de type PtRuOx (*E-TEK*®). Les résultats obtenus sont donnés sur la figure 1.

### Application au stockage de l'hydrogène

### Exemple 2

### Partie (a) - essais comparatifs

Dans un creuset en acier de 55 ml d'un broyeur de marque *SPEX 8000*®, on a placé deux billes d'acier de 1/2 pouce de diamètre et une bille d'acier de 9/16 pouce de diamètre. Le poids total des billes était de 28,680 g. Un mélange de stoechiométrie 2Mg + Ni d'un poids total de 3,158 g a été chargé dans le creuset. Le tout a été mis sous argon et scellé. La charge a alors été broyée durant 150 heures. La formation d'un alliage intermétallique nanocristallin Mg₂Ni a été confirmé par diffraction X.

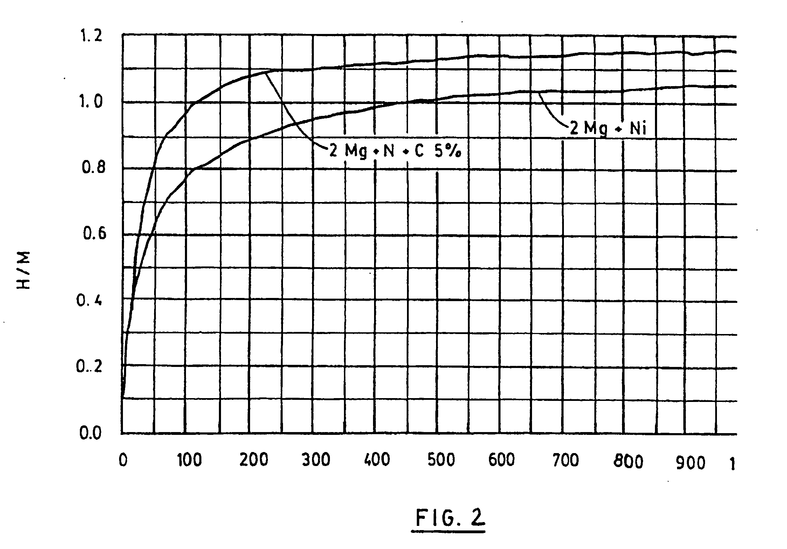

La cinétique d'absorption d'hydrogène a alors été mesurée avec un système de titration d'hydrogène. La figure 2 montre la courbe d'absorption à 300°C sous une pression de 200 psi, après un cycle d'absorption/désorption.

### Partie (b) - essais selon l'invention

En utilisant les mêmes matériaux que dans la partie (a) et le même mélange avec en plus 5% en poids de graphite, on a procédé à la préparation d'un alliage nanocristallin. Dans ce cas, le broyage a été effectué à chaud (200°C) durant 8 heures.

La figure 2 montre la vitesse d'absorption de cette poudre à 300°C sous une pression 200 psi après un cycle d'absorption/désorption. On constate que la cinétique d'absorption est très supérieure à celle obtenue à la partie (a) et ce bien que le broyage a été plus court (mais à chaud).

Ceci peut s'expliquer de la façon suivante: après broyage, la proportion de carbone mesurée était de 5,2% en poids. Après quelques cycles d'absorption/désorption d'hydrogène, la proportion de carbone est descendue à 3,7% poids. Cette différence pourrait s'expliquer par le fait que, au cours des cycles successifs d'absorption/désorption à chaud, une partie du carbone présent a été lixivié possiblement sous forme de méthane CH₄, ceci augmentant "naturellement" la surface spécifique de l'alliage et, de là, son efficacité (la figure 2 est tout à fait illustrative de cette augmentation de cinétique d'absorption).

### Exemple 3

En procédant comme dans l'exemple 2, on a préparé un matériau nanocristallin de composition MgLi 10% en poids. Pour ce faire, on a utilisé comme produit de départ 3,3 g de Mg et 0,331 g de Li.

La charge a été broyée durant 50 heures. La poudre obtenue a été lixiviée dans de l'eau distillée sous agitation magnétique puis ultrasonique.

La surface spécifique de la poudre ainsi obtenue avant et après lixiviation ont été mesurées. Les surfaces spécifiques ainsi mesurées étaient les suivantes:
avant lixiviation: 1,1118 m²/g
après lixiviation: 11,4688 m²/g

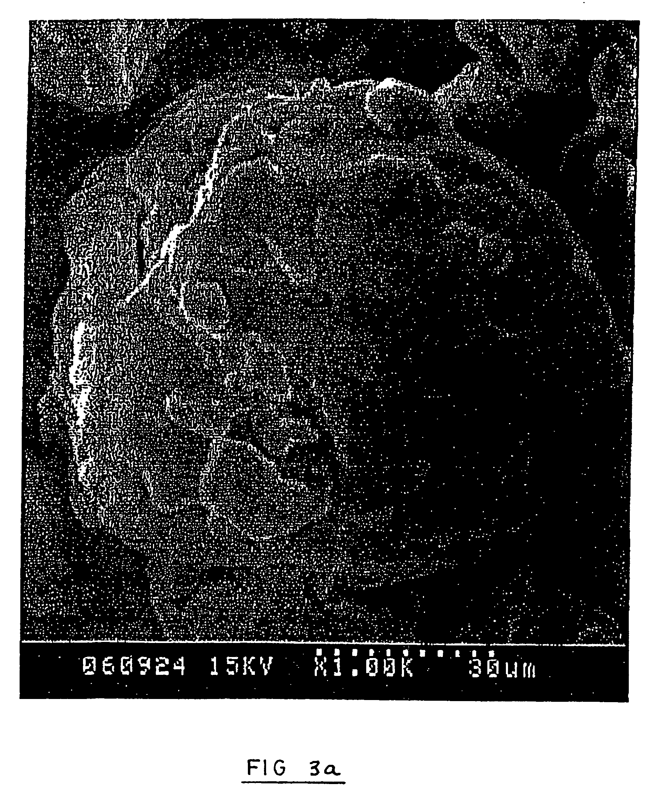

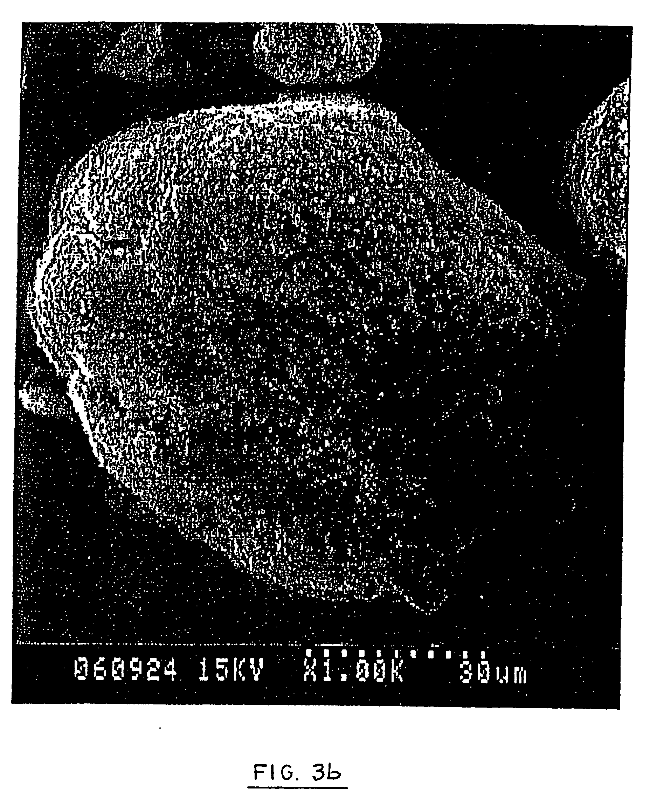

La morphologie des particules avant et après lixiviation est présentée sur les figures 3a et 3b. Comme on le voit, la lixiviation augmente substantiellement la surface spécifique et, comme il a été démontré à l'exemple 2 , l'efficacité du matériau pour le stockage de l'hydrogène.

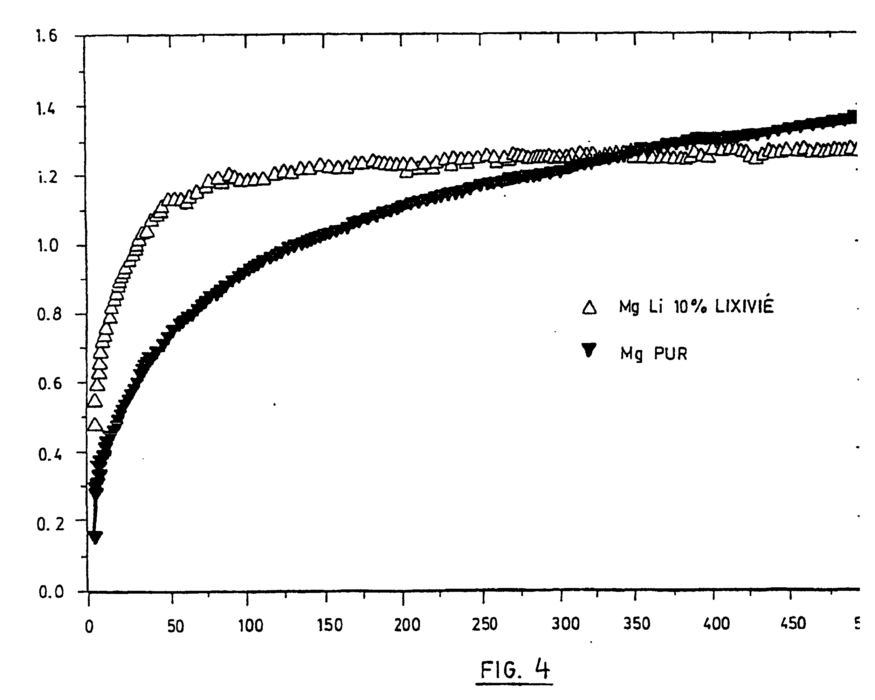

La figure 4 montre la vitesse d'absorption de la poudre nanocristalline ainsi obtenue après lixiviation (courbe Δ). Pour fins de comparaison, les résultats obtenus avec de la poudre de Mg nanocristallin pur sont également donnés (courbe ▼). Ces essais ont été effectués à 400°C sous une pression de 36 bars. Comme on peut le voir, la cinétique d'absorption de la poudre de Mg lixiviée est très supérieure à celle de la poudre de Mg non lixiviée.

## Revendications

1. Procédé de fabrication d'un matériau nanocristallin ayant une grande surface spécifique, du type dans lequel:
- dans une première étape, on prépare un matériau nanocristallin constitué d'un composite ou alliage d'au moins deux composés ou éléments chimiques distincts, le matériau ainsi préparé ayant une structure nanocristalline avec des cristaux de taille inférieure à 100 nm; et
- dans une seconde étape, on soumet ledit matériau nanocristallin à une lixiviation de façon à éliminer partiellement ou totalement au moins un desdits éléments ou composés du composite ou de l'alliage, cette lixiviation donnant au matériau résultant une structure avec une grande surface spécifique,
**caractérisé en ce que** le composite ou alliage préparé à la première étape est de type métastable et **en ce que** les composés ou éléments chimiques distincts qui le composent incluent au moins un élément métallique et au moins un élément non métallique choisi dans le groupe constitué par H, C, N, O, F, Cl, P et S.

2. Procédé selon la revendication 1, **caractérisé en ce que**:
- le ou les éléments lixiviés dans la seconde étape incluent le ou lesdits éléments non métalliques H, C, N, O, F, Cl, P et S; et
- la lixiviation de ce ou ces éléments est effectuée par traitement thermique ou pyrolyse ou par réaction avec une phase liquide ou gazeuse.

3. Procédé selon la revendication 1, **caractérisé en ce que**:
- le ou les éléments lixiviés dans la seconde étape sont choisis dans les groupes constitués par, d'une part, Mg, Li, Na, K, Ca, Ti, Zr, Mo et Zn et, d'autre part, les éléments non métalliques H, C, N, O, F, Cl, P et S; et
- la lixiviation de ce ou ces éléments est effectuée par traitement thermique ou pyrolyse, par réaction avec une phase liquide ou gazeuse ou par une combinaison de traitement thermique ou pyrolyse et réaction avec une phase liquide ou gazeuse.

4. Procédé selon la revendication 1, **caractérisé en ce que**:
- dans la première étape, le matériau nanocristallin fabriqué, est constitué d'un alliage ou d'un composite incorporant un composé organométallique comprenant un métal et une partie organique, et
- dans la deuxième étape, on lixivie la partie organique du matériau par traitement thermique ou pyrolyse ou par réaction avec une phase liquide ou gazeuse.

5. Procédé selon l'une quelconque des revendications 1 à 4, **caractérisé en ce que**:
- dans la première étape, le matériau nanocristallin est préparé sous forme de poudre par broyage mécanique intense.

6. Procédé selon la revendication 5, **caractérisé en ce que**:
- dans la première étape, le matériau nanocristallin est préparé en soumettant à un premier broyage mécanique intense le ou les composés et éléments du matériau jusqu'à l'obtention d'une poudre nanocristalline, en ajoutant le ou les composés ou éléments à lixivier à la poudre ainsi obtenue et en soumettant le tout à un second broyage mécanique intense.

7. Procédé selon l'une quelconque des revendications 1 à 4, **caractérisé en ce que**:
- dans la première étape, le matériau nanocristallin est préparé par trempe rapide.

8. Procédé selon l'une quelconque des revendications 1 à 4, **caractérisé en ce que**:
- dans la première étape, le matériau nanocristallin est préparé par condensation en phase vapeur.

9. Procédé selon l'une quelconque des revendications 1 à 8, **caractérisé en ce que**:
- dans la première étape, la quantité d'élément ou composé à lixivier combiné au(x) autre(s) élément(s) ou composé(s) du composite ou de l'alliage est choisie de façon à ce que le pourcentage atomique dudit élément ou composé à lixivier dans ledit composite ou alliage soit compris entre 2 et 95%.

10. Matériau nanocristallin à grande surface spécifique, **caractérisé en ce qu'**il a une structure cristalline avec des cristaux de taille inférieure à 100 nm et une surface spécifique supérieure ou égale à 2 m²/g, et **en ce qu'**il est fabriqué par un procédé selon l'une quelconque des revendications 1 à 9.

11. Usage pour le stockage de l'hydrogène d'un matériau nanocristallin selon la revendication 10, comprenant au moins un élément ou composé chimique connu pour absorber de façon réversible l'hydrogène.

12. Usage comme catalyseur ou électrocatalyseur d'un matériau nanocristallin selon la revendication 10, comprenant au moins un élément ou composé chimique connu comme étant utilisable comme catalyseur ou électrocatalyseur.

## Claims

1. Process for the manufacture of a nanocrystalline material having a high specific surface, of the type wherein:
(1) in a first step, a nanocrystalline material is prepared, which consists of a composite or alloy of at least two different chemical compounds or elements, the so-prepared material having a nanocrystalline structure with crystallites of a grain size lower than 100 nm; and
(2) in a second step, said nanocrystalline material is subjected to a leaching in order to eliminate partially or totally at least one of said elements or compounds of the composite or alloy, this leaching giving to the resulting material a structure with a high specific surface area,
**characterized in that** the composite or alloy prepared in the first step is of a metastable type and **in that** the different chemical compounds or elements that form it, include at least one metallic element and at least one non-metallic element selected from the group consisting of H, C, N, O, F, Cl, P and S.

2. Process according to claim 1, **characterized in that**:
- the at least one element leached in the second step includes said at least one non-metallic element H, C, N, O, F, Cl, P and S; and
- the leaching of said at least one element is carried out by thermal treatment or pyrolysis or by reaction with a liquid or gaseous phase.

3. Process according to claim 1, **characterized in that**:
- said at least one element leached in the second step is selected from the groups consisting of; on the one hand, Mg, Li, Na, K, Ca, Ti, Zr, Mo and Zn and, on the other hand, the non-metallic elements H, C, N, O, F, Cl, P and S; and
- the leaching of said at least one element is carried out by thermal treatment or pyrolysis, by reaction with a liquid or gaseous phase or by a combination of thermal treatment or pyrolysis and reaction with a liquid or gaseous phase.

4. Process according to claim 1, **characterized in that**:
- in the first step, the nanocrystalline material that is prepared, consists of an alloy or a composite incorporating an organometallic component including a metal and an organic part; and
- in the second step, the organic group contained in the material Is leached by thermal treatment or pyrolysis or by reaction with a liquid or gaseous phase.

5. Process according to any one of claims 1 to 4, **characterized in that**:
- in the first step, the nanocrystalline alloy is prepared in the form of a powder by intense mechanical grinding.

6. Process according to claim 5, **characterized in that**:
- in the first step, the nanocrystalline material is prepared by subjecting said at least one compound or element of the material to a first intense mechanical grinding until a nanocrystalline powder is obtained, by adding said at least one compound or element to be leached to the so-obtained powder and by subjecting the whole product to a second intense mechanical grinding.

7. Process according to any one of claims 1 to 4, **characterized in that**:
- in the first step, the nanocrystalline material is prepared by quenching.

8. Process according to any one of claims 1 to 4, **characterized in that**;
- in the first step, the nanocrystalline material is prepared by condensation in vapor phase.

9. Process according to any one of claims 1 to 8, **characterized in that**:
- in the first step, the amount of the element or compound to be leached combined with said at least one other element or compound of the composite or alloy is selected so that the atomic percentage of said element or compound to be leached within said composite or alloy ranges between 2% and 95%.

10. Nanocrystalline material with a high specific surface, **characterized in that** it has a crystalline structure with crystallites of a grain size lower than 100 nm and a specific surface area equal to or higher than 2 m²/g, and **in that** it is prepared by a process according to any one of claims 1 to 9.

11. Use for storing hydrogen of a nanocrystalline material according to claim 10, comprising at least one chemical element or compound known to absorb hydrogen in a reversible manner.

12. Use as a catalyst or electrocatalyst of a nanocrystalline material according to claim 10, comprising at least one chemical element or compound known to be useful as a catalyst or electrocatalyst.

## Patentansprüche

1. Verfahren zur Herstellung eines nanokristallinen Materials mit großer spezifischer Oberfläche, des Typs, worin man:
- in einem ersten Schritt ein nanokristallines Material herstellt, bestehend aus einem Verbundmaterial oder einer Legierung mindestens zweier chemisch unterschiedlicher Verbindungen oder Elemente, wobei das so hergestellte Material eine nanokristalline Struktur mit Kristallen einer Größe unterhalb von 100 nm aufweist, und
- man in einem zweiten Schritt das nanokristalline Material einer Auslaugung in der Weise unterzieht, um mindestens eines der Elemente oder eine der Verbindungen des Verbundmaterials oder der Legierung partiell oder insgesamt zu eliminieren, wobei die Auslaugung ein Material mit einer Struktur mit großer spezifischer Oberfläche ergibt,
**dadurch gekennzeichnet, dass** das Verbundmaterial oder die Legierung, die im ersten Schritt hergestellt wird, vom metastabilen Typ ist und dass die chemisch unterschiedlichen Verbindungen oder Elemente, die diese zusammensetzen, mindestens ein metallisches Element und mindestens ein nichtmetallisches Element, ausgewählt aus der Gruppe, bestehend aus H, C, N, O, F, Cl, P und S, enthalten.

2. Verfahren gemäß Anspruch 1, **dadurch gekennzeichnet, dass**:
- der oder die im zweiten Schritt ausgelaugten Elemente das oder die nichtmetallischen Elemente H, C, N, O, F, Cl, P und S einschließen, und
- die Auslaugung des oder der Elemente über thermische Behandlung oder Pyrolyse oder Reaktion mit einer flüssigen oder gasförmigen Phase bewirkt wird.

3. Verfahren gemäß Anspruch 1, **dadurch gekennzeichnet, dass**:
- das oder die im zweiten Schritt ausgelaugten Elemente ausgewählt sind aus den Gruppen, die zum einen Teil bestehen aus Mg, Li, Na, K, Ca, Ti, Zr, Mo und Zn und zum anderen Teil aus den nichtmetallischen Elementen H, C, N, O, F, Cl, P und S; und
- die Auslaugung des oder der Elemente über thermische Behandlung oder Pyrolyse, durch Reaktion mit einer flüssigen oder gasförmigen Phase oder durch eine Kombination von thermischer Behandlung oder Pyrolyse und Reaktion mit einer flüssigen oder gasförmigen Phase bewirkt wird.

4. Verfahren gemäß Anspruch 1, **dadurch gekennzeichnet, dass**:
- in dem ersten Schritt das hergestellte nanokristalline Material aufgebaut ist aus einer Legierung oder einem Verbundmaterial, enthaltend eine organometallische Verbindung, umfassend ein Metall und einen organischen Teil, und
- dass man in dem zweiten Schritt den organischen Teil des Materials durch thermische Behandlung oder Pyrolyse oder Reaktion mit einer flüssigen oder gasförmigen Phase auslaugt.

5. Verfahren gemäß einem der Ansprüche 1 bis 4, **dadurch gekennzeichnet, dass**:
- in dem ersten Schritt das nanokristalline Material in Form eines Pulvers über intensive mechanische Zerkleinerung hergestellt wird.

6. Verfahren gemäß Anspruch 5, **dadurch gekennzeichnet, dass**:
- das nanokristalline Material in dem ersten Schritt hergestellt wird, indem man die Verbindung(en) und Elemente des Materials bis zum Erhalt eines nanokristallinen Pulvers einer ersten intensiven mechanischen Zerkleinerung unterwirft und das oder die Verbindungen oder Elemente zum Auslaugen zu dem so erhaltenen Pulver hinzu gibt und das Ganze einer zweiten intensiven mechanischen Zerkleinerung unterwirft.

7. Verfahren gemäß einem der Ansprüche 1 bis 4, **dadurch gekennzeichnet, dass**:
- das nanokristalline Material in dem ersten Schritt über schnelles Härten erhalten wird.

8. Verfahren gemäß einem der Ansprüche 1 bis 4, **dadurch gekennzeichnet, dass**:
- das nanokristalline Material im ersten Schritt über Kondensation aus der Dampfphase hergestellt wird.

9. Verfahren gemäß einem der Ansprüche 1 bis 8, **dadurch gekennzeichnet, dass**:
- in dem ersten Schritt die Menge des auszulaugenden Elements oder der Verbindung, die mit dem/den anderen Element(en) oder Verbindung(en) des Verbundmaterials oder der Legierung kombiniert wird, so gewählt wird, dass der Atomprozentgehalt des auszulaugenden Elements oder der Verbindung in dem Verbundmaterial oder der Legierung zwischen 2 und 95 % liegt.

10. Nanokristallines Material mit großer spezifischer Oberfläche, **dadurch gekennzeichnet, dass** es eine kristalline Struktur mit Kristallen einer Größe unterhalb von 100 nm und eine spezifische Oberfläche oberhalb oder gleich 2 m²/g aufweist und dass es über ein Verfahren gemäß einem der Ansprüche 1 bis 9 hergestellt wird.

11. Verwendung eines nanokristallinen Materials gemäß Anspruch 10, umfassend mindestens ein Element oder eine chemische Verbindung, bekannt für die reversible Absorption von Wasserstoff, zur Speicherung von Wasserstoff.

12. Verwendung eines nanokristallinen Materials gemäß Anspruch 10, umfassend mindestens ein Element oder eine chemische Verbindung, bekannt dafür, dass sie als Katalysator oder Elektrokatalysator verwendbar ist, als Katalysator oder Elektrokatalysator.
